# EUROPÄISCHE PATENTSCHRIFT

(11) **EP 2 191 295 B1**
(45) Veröffentlichungstag und Bekanntmachung des Hinweises auf die Patenterteilung: **22.10.2014**
(21) Anmeldenummer: 08786284.3
(22) Anmeldetag: 21.07.2008
(51) Int. Cl.: G01S 13/34, G01S 13/93

(54) **KFZ-FMCW-RADAR BEABSTANDETEN, LINEAREN FREQUENZ-RAMPEN UNTERSCHIEDLICHER STEIGUNG, DIE UNTERSCHIEDLICHEN WINKELBEREICHEN ZUGEORDNET SIND**
MOTOR VEHICLE FMCW RADAR WITH SPACED-APART LINEAR FREQUENCY RAMPS WITH DIFFERENT GRADIENTS WHICH ARE ASSIGNED TO DIFFERENT ANGULAR RANGES
RAMPES DE FRÉQUENCE LINÉAIRES ESPACÉES D'INCLINAISON DIFFÉRENTE, ASSOCIÉES À DES SECTEURS ANGULAIRES DIFFÉRENTS, POUR RADAR FM-CW SUR VÉHICULE À MOTEUR

(30) Priorität: 12.09.2007 DE 102007043535
(43) Veröffentlichungstag der Anmeldung: 02.06.2010
(73) Patentinhaber: Robert Bosch GmbH, 70442 Stuttgart (DE)
(72) Erfinder: FOCKE, Thomas, 31180 Ahrbergen (DE); HILSEBECHER, Joerg, 31135 Hildesheim (DE); ZENDER, Arne, 31162 Bad Salzdetfurth (DE); SCHOEBERL, Thomas, 31139 Hildesheim (DE); HANSEN, Thomas, 31139 Hildesheim (DE)
(86) Internationale Anmeldenummer: PCT/EP2008/059542
(87) Internationale Veröffentlichungsnummer: WO 2009/033863

(56) Entgegenhaltungen:
- WO-A-03/048801
- WO-A-2008/006653
- WO-A2-2007/014333
- DE-A1- 2 054 985
- DE-A1- 10 355 796
- DE-A1-102004 052 518
- DE-C1- 19 529 173
- GB-A- 2 165 414
- JP-A- 2004 151 022
- JP-A- 2005 010 130
- US-A- 5 963 163
- US-A1- 2002 044 082
- US-A1- 2005 046 597

## Beschreibung

### STAND DER TECHNIK

Die vorliegende Erfindung betrifft eine FMCW-Radarortungsvorrichtung und ein entsprechendes FMCW-Radarortungsverfahren, ähnlich dem in DE 10 2004 052 518 beschriebenen.

Obwohl auf beliebige Radarortungsvorrichtungen anwendbar, werden die vorliegende Erfindung und die ihr zugrundeliegende Problematik im Hinblick auf einen Einsatz in Automobilen erläutert.

Analysen haben gezeigt, dass eine erhebliche Anzahl von Verkehrsunfällen durch rechtzeitiges Erkennen von Gefahren und durch entsprechende angemessene Fahrmanöver vermieden werden kann. Eine Vermeidung kann durch geeignete Warnhinweise an den Fahrer oder durch automatische longitudinale und/oder laterale Kontrolle des Fahrzeugs erreicht werden. Eine Voraussetzung für die Wahrnehmung der Gefahrensituation sind geeignete Sensorvorrichtungen.

Seit längerer Zeit werden Radarsysteme im Millimeterwellenbereich als Fahrerassistenzsysteme zur Wahrnehmung von Gefahren eingesetzt. Dabei unterscheidet man gepulste Radarsysteme und Continuous-Wave-Radarsysteme (CW),. 77-GHZ-FMCW-Radarsysteme ermöglichen beispielsweise eine Erfassung von Objekten innerhalb eines Bereichs von wenigen Zentimeter bis über 250 Meter. Dabei werden gleichzeitig Abstand der Objekte und Relativgeschwindigkeit der Objekte zum eigenen Fahrzeug sowie bei entsprechender Antennenanzahl deren Winkel zur eigenen Fahrzeuglängsachse ermittelt.

Bei üblichen FMCW-Radarsystemen wird ein Signal ausgesendet, welches sich ständig in der Frequenz ändert. Um den Frequenzbereich zu begrenzen und die Auswertung zu erleichtern, werden typischer Weise mehrere linear auf- und oder absteigende Rampen verwendet..

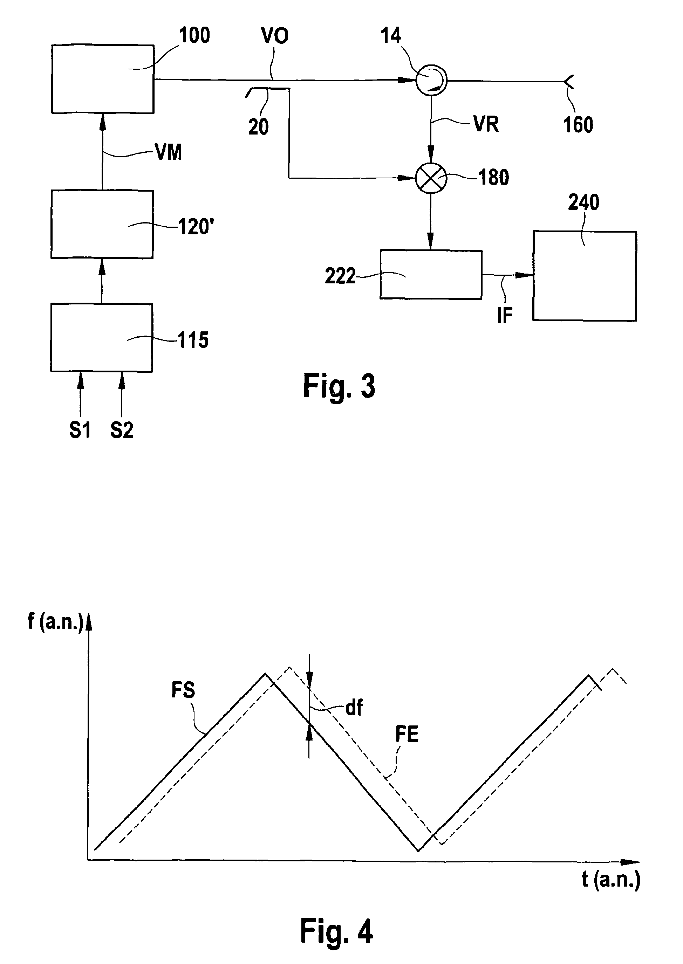

Fig. 4 zeigt eine Darstellung der Zeitabhängigkeit (Zeit t) der Sendefrequenz f einer bekannten FMCW-Radarortungsvorrichtung.

In Fig. 4 bezeichnet Bezugszeichen FS ein Sendesignal und FE ein entsprechendes Echosignal. Der Betrag der Änderungsrate (Rampensteilheit) des Sendesignals FS ist bei derartigen bekannten Radarsystemen konstant. Wird das Echosignal FE empfangen, dann hat dieses eine Laufzeitverschiebung und somit eine vom Sendesignal abweichende Frequenz. Anhand des Frequenzunterschiedes df kann z.B. die Entfernung zum Messobjekt ermittelt werden.

Die DE 10 2004 034 429 A1 beschreibt ein Radarortungssystem mit einer Vielzahl von Sendeelementen, mindestens zwei Empfangselementen und einer Vorrichtung zur digitalen Steuerung der Verarbeitung der Empfangssignale der Empfangselemente, welche nach dem FMCW-Prinzip arbeitet.

### VORTEILE DER ERFINDUNG

Die in Anspruch 1 definierte erfindungsgemäße FMCW-Radarortungsvorrichtung und das entsprechende FMCW-Radarortungsverfahren gemäss Anspruch 8 bieten gegenüber herkömmlichen Lösungen den Vorteil, dass sie in vorbestimmten weniger wichtigen Bereichen eine grobe Auflösung und in vorbestimmten wichtigen Bereichen eine feine Auflösung bieten.

Da man bei FMCW-Radarortungssystemen einen Frequenz-Winkelzusammenhang vorsehen kann, kann man über die unterschiedlichen Steigungen der Rampen die Auflösung im betreffenden Winkelbereich einstellen. Somit erzielt man vorzugsweise eine in den Randbereichen grobe und in Bewegungsrichtung feine Auflösung, d. h. eine Groberkennung von beispielsweise einer Leitplanke und eine Feinerkennung von beispielsweise einem vorausfahrenden Fahrzeug.

Die der vorliegenden Erfindung zugrunde liegende Idee besteht darin, bei einer FMCW-Radarortungsvorrichtung nicht Rampen mit betragsmäßig einheitlicher Steigung zu fahren, sondern unstetige Rampen mit stückweise unterschiedlichen Steigungen zu fahren. Mit anderen Worten wird die Rampensteilheit (Frequenzänderung pro Zeit) während einer Rampe in Abhängigkeit vom Sichtbereich verändert. Uninteressante Bereiche lassen sich dadurch schneller als interessante Bereiche scannen.

Die in den Unteransprüchen aufgeführten Merkmale beziehen sich auf vorteilhafte Weiterbildungen und Verbesserungen des Gegenstandes der Erfindung.

Gemäß einer bevorzugten Weiterbildung entsprechen die ersten Frequenzsegmente und/oder die zweiten Frequenzsegmente jeweiligen unterschiedlichen Winkelbereichen eines Gesamterfassungsbereichs.

Gemäß einer weiteren bevorzugten Weiterbildung durchlaufen die ersten Frequenzsegmente den Gesamterfassungsbereich in einer ersten Richtung und die zweiten Frequenzsegmente den Gesamterfassungsbereich in einer zweiten Richtung, wobei die zweite Richtung der ersten Richtung entgegengesetzt ist.

Gemäß einer weiteren bevorzugten Weiterbildung weisen die ersten Frequenzsegmente und/oder die zweiten Frequenzsegmente unterschiedliche Steigungen entsprechend unterschiedlicher Echosignalauflösung auf.

Gemäß einer weiteren bevorzugten Weiterbildung entsprechen Frequenzsegmente geringerer Echosignalauflösung grösseren Steigungen und zugleich grösseren Winkelbereichen und Frequenzsegmente grösserer Echosignalauflösung kleineren Steigungen und zugleich kleineren Winkelbereichen.

Gemäß einer weiteren bevorzugten Weiterbildung sind die ersten Frequenzsegmente und/oder die zweiten Frequenzsegmente durch die Steuereinrichtung fest vorgebbar.

Gemäß einer weiteren bevorzugten Weiterbildung sind die ersten Frequenzsegmente und/oder die zweiten Frequenzsegmente durch die Steuereinrichtung flexibel in Abhängigkeit von mindestens einem Fahrparameter gestaltbar.

### ZEICHNUNGEN

Ausführungsbeispiele der Erfindung sind in der Zeichnung dargestellt und in der nachfolgenden Beschreibung näher erläutert.

Es zeigen
- Fig. 1: ein Blockdiagramm einer FMCW-Radarortungsvorrichtung gemäß einer ersten Ausführungsform der vorliegenden Erfindung;
- Fig. 2a: eine Darstellung der Zeitabhängigkeit der Sendefrequenz der FMCW-Radarortungsvorrichtung gemäß der ersten Ausführungsform der vorliegenden Erfindung;
- Fig. 2b: eine Darstellung der Frequenz-Winkelzusammenhang der Sendefrequenz der FMCW-Radarortungsvorrichtung gemäß der ersten Ausführungsform der vorliegenden Erfindung;
- Fig. 3: ein Blockdiagramm einer FMCW-Radarortungsvorrichtung gemäß einer zweiten Ausführungsform der vorliegenden Erfindung; und
- Fig. 4: eine Darstellung der Zeitabhängigkeit der Sendefrequenz einer bekannten FMCW-Radarortungsvorrichtung.

### BESCHREIBUNG VON AUSFÜHRUNGSBEISPIELEN

In den Figuren bezeichnen gleiche Bezugszeichen gleiche bzw. funktionsgleiche Elemente.

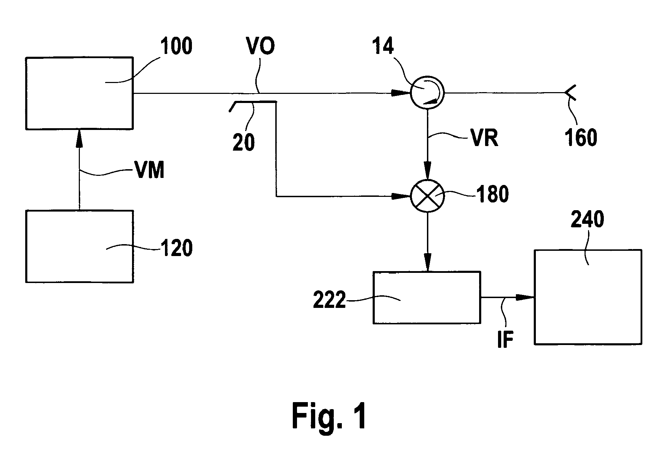

Fig. 1 ist ein Blockdiagramm einer FMCW-Radarortungsvorrichtung gemäß einer ersten Ausführungsform der vorliegenden Erfindung.

Ein spannungsgesteuerter Oszillator 100 wird gesteuert bzw. moduliert durch ein Ausgangssignal VM einer Steuereinrichtung 120, und das Ausgangssignal VO des spannungsgesteuerten Oszillators 100 wird an einen Zirkulator 14 ausgegeben. Ein erstes Ausgangssignal des Zirkulators 14 liefert das Ausgangssignal VO des spannungsgesteuerten Oszillators 100 im Wesentlichen ungeschwächt an eine Antenne 160, welche das frequenz-modulierte Signal als Sendesignal abstrahlt. Das abgestrahlte Sendesignal kann zur Antenne 160 von einem oder mehreren zu erfassenden Objekten rückreflektiert werden, und das so reflektierte Echosignal VR läuft von der Antenne 160 zurück zum Zirkulator 14, welcher das reflektierte Echosignal VR von seinem zweiten Ausgang an einen Eingang eines Mischers 180 liefert. Ein zweiter Eingang des Mischers 180 wird über einen Koppler 20 mit dem Ausgangssignal VO des spannungsgesteuerten Oszillators 100 gespeist. Das Ausgangssignal des Mischers 180 wird an einen Tiefpassfilter 222 geliefert, um ein Zwischenfrequenzsignal IF an eine Signalverarbeitungsvorrichtung 240 zu liefern. Die Signalverarbeitungsvorrichtung 240 führt eine Fourier-Transformation des Zwischenfrequenzsignals IF durch, denn der Bereich von irgendwelchen Objekten im Radargesichtsfeld liegt als Frequenzinformation im Zwischenfrequenzsignal IF vor.

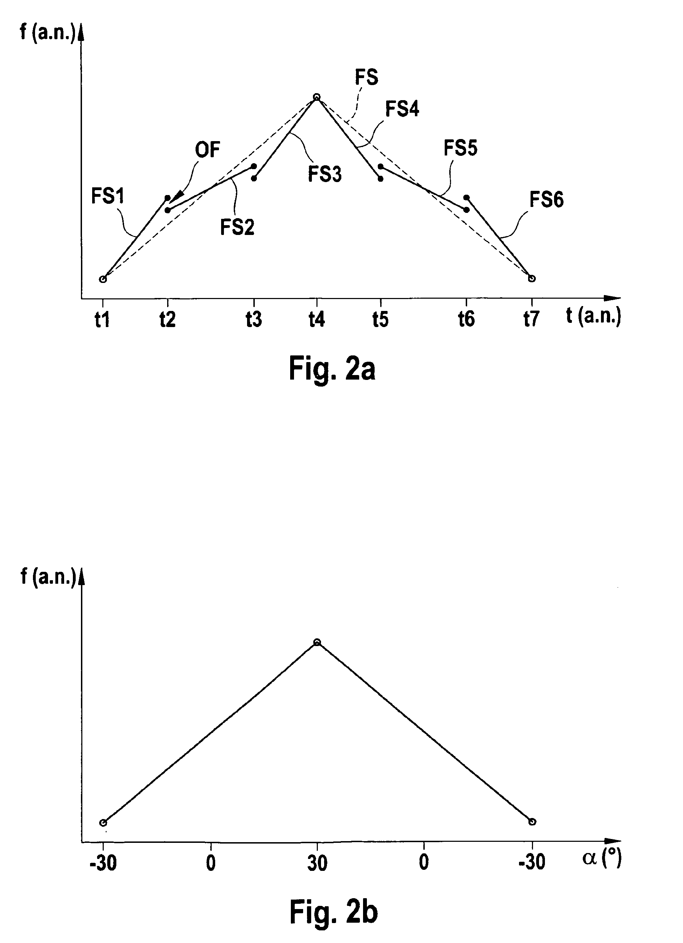

Fig. 2a zeigt eine Darstellung der Zeitabhängigkeit der Sendefrequenz der FMCW-Radarortungsvorrichtung gemäß der ersten Ausführungsform der vorliegenden Erfindung, und Fig. 2b zeigt eine entsprechende Darstellung des Frequenz-Winkelzusammenhangs (Winkel α) der Sendefrequenz der FMCW-Radarortungsvorrichtung gemäß der ersten Ausführungsform der vorliegenden Erfindung;

Figur 2a zeigt sowohl die Zeitabhängigkeit des herkömmlichen Sendesignals FS (gestrichelte Linie, vergleiche Figur 4) und des Sendesignals gemäß der Ausführungsform, welches stückweise konstant ist und sich aus den Frequenzsegmenten FS1 (t1 bis t2), FS2(t2 bis t3), FS3(t3 bis t4), FS4(t4 bis t5), FS5 (t5 bis t6), FS6 (t6 bis t7) mit unterschiedlichen Steigungen zusammensetzt.

Wie aus Fig. 2a ersichtlicht, steigt die Frequenz zwischen den Zeiten t1 und t4 in drei unterschiedlichen Frequenzsegmenten bzw. Rampen an und fällt zwischen den Zeiten t4 und t7 in drei unterschiedlichen Rampen ab. Danach wiederholen sich Anstieg und Abfall periodisch weiter.

Dabei ist die betragsmäßige Rampensteilheit der Frequenzsegmente FS1, FS3, FS4, FS6 gleich und ebenfalls die betragsmäßige Rampensteilheit der Frequenzsegmente FS2, FS5. Wie ebenfalls aus Figur 2 erkennbar, ist die betragsmäßige Rampensteilheit der Frequenzsegmente FS1, FS3, FS4, FS6 größer als die betragsmäßig Rampensteilheit der Frequenzsegmente FS2, FS5. Dies hängt damit zusammen, dass eine höhere Rampensteilheit eine schlechtere Auflösung (kürzere Abtastung) und eine geringere Rampensteilheit eine bessere Auflösung (längere Abtastung) mit sich bringt.

Eine derartige geringere Rampensteilheit bzw. bessere Auflösung gemäß der Frequenzsegmente FS2, FS5 ist im Abstastwinkelbereich von ca. -12° bis +12° erwünscht, wohingegen im Winkelbereich zwischen -12° und -30° bzw. +12 und +30° eine geringere bzw. gröbere Auflösung ausreicht. Ebenfalls erkennbar aus Figur 2 ist ein sprungartiger Offset OF an den Übergangsstellen von jeweils zwei Frequenzsegmenten. Dies trägt zur Vereinfachung der Signalverarbeitung und zur besseren Identifizierung der empfangenen Echos bei, ist aber nicht unbedingt erforderlich.

Fig. 3 ist ein Blockdiagramm einer FMCW-Radarortungsvorrichtung gemäß einer zweiten Ausführungsform der vorliegenden Erfindung.

Während bei der ersten Ausführungsform die Rampensteilheiten der Frequenzsegmente FS1 - FS6 durch die Steuereinrichtung 120 fest vorgegeben sind, werden bei Steuereinrichtung 120' der zweiten Ausführungsform Informationen zur benötigten Auflösung und damit zu den Steilheiten der Frequenzsegmente aus Signalen von Sensoren S1, S2 gewonnen und darauf basierend über eine Festlegungseinrichtung 115 nach vorgegebenen Kriterien festgelegt. Diese Informationen können aus verschiedenen Sensor-Quellen gewonnen werden, wie z. B. Navigation, Erfahrung, Fahrzeug-Fahrzeug-Kommunikation, Fahrzustand (Geschwindigkeit, Beschleunigung.....), weitere Umweltsensorik, Umgebung. Beim vorgegebenen Beispiel soll S1 einen Geschwindigkeitssensor und S2 einen Beschleunigungssensor darstellen.

Mit anderen Worten sind die Frequenzsegmente FS1-FS6 bei der ersten Ausführungsform fest vorgegeben und bei der zweiten Ausführungsform in Abhängigkeit von mindestens einem Fahrparameter flexibel gestaltet.

Obwohl die vorliegende Erfindung vorstehend anhand bevorzugter Ausführungsbeispiele beschrieben wurde, ist sie darauf nicht beschränkt, sondern auf vielfältige Weise modifizierbar.

Die Steilheit der Frequenzsegmente kann in Abhängigkeit von der Fahrsituation bzw. der Fahrumgebung bzw. der konkreten Signalerfassung und -auswertung vollkommen verschieden ausgelegt sein. So macht es beispielsweise bei Kurvenfahrten Sinn, die Kurve feiner auszuleuchten, also grössere Winkel feiner aufzulösen.

Prinzipiell kann eine Änderung der Auflösung auch durch eine dynamische bzw. unstetige Änderung der Abtastfrequenzbereiche bewirkt werden, z. B. eine kleine Abtastfrequenz von t1 bis t2 und t3 bis t4 und eine hohe Abtastfrequenz von t2 bis t3. Die Änderung der Abtastfrequenz kann auch durch ein Dezimationsfilter erreicht werden. Die Rampen können sich bezüglich der Anfangs- und Endfrequenz überschneiden.

## Patentansprüche

1. FMCW-Radarortungsvorrichtung mit:
einer Sendeeinrichtung (100, 14, 160) zum Aussenden eines Sendesignals (VO) mit einer steuerbaren Sendesignal-Erzeugungseinrichtung (100) zum Erzeugen des Sendesignals (VO) mit einer Frequenz (f) entsprechend einem eingegebenen Steuersignal (VM);
einer Steuereinrichtung (120; 120'), welche mit der Sendesignal-Erzeugungseinrichtung (100) verbunden ist, zum Erzeugen des Steuersignals (VM);
einer Empfangseinrichtung (160, 14, 180, 222, 240) zum Empfangen eines von einem Objekt reflektierten Echosignals (VR) und zum Durchführen einer darauf basierenden Ortung des Objekts.
wobei die Steuereinrichtung (120) derart gestaltet ist, dass sie ein derartiges Steuersignal (VM) erzeugt, dass das Sendesignal (VO) einen periodischen Verlauf aufweist, **dadurch gekennzeichnet, dass** eine Periode (t₁, t₇) erste und zweite Frequenzsegmente (FS1-FS3, FS4-FS6) umfasst und die ersten Frequenzsegmente (FS1-FS3) unstetig linear jeweils ansteigend über die Zeit und die zweiten Frequenzsegmente (FS4-FS6) unstetig linear jeweils abfallend über die Zeit verlaufen; und wobei die jeweiligen ersten und zweiten Frequenzsegmente (FS1-FS3, FS4-FS6) jeweils einen sprungartigen Frequenz Offset (OF) an den Übergangsstellen zwischen jeweils zwei aufeinanderfolgenden ersten Frequenzsegmenten (FS1 - FS3) und zwischen jeweils zwei aufeinanderfolgenden zweiten Frequenzsegmenten (FS4 -FS6) aufweisen und wobei die ersten Frequenzsegmente (FS1-FS3) jeweils untereinander und die zweiten Frequenzsegmente (FS4-FS6) jeweils untereinander unterschiedlichen Winkelbereichen eines Gesamterfassungsbereichs entsprechen und wobei aufeinanderfolgende erste Frequenzsegmente (FS1-FS3) unterschiedliche Steigungen über der Zeit (t) entsprechend unterschiedlicher Echowinkelsignalauflösung und aufeinanderfolgende zweite Frequenzsegmente (FS4-FS6) unterschiedliche Steigungen über der Zeit (t) entsprechend unterschiedlicher Echowinkelsignalauflösung aufweisen.

2. FMCW-Radarortungsvorrichtung nach Anspruch 1, wobei die ersten Frequenzsegmente (FS1-FS3) den Gesamterfassungsbereich in einer ersten Richtung durchlaufen und die zweiten Frequenzsegmente (FS4-FS6) den Gesamterfassungsbereich in einer zweiten Richtung durchlaufen, wobei die zweite Richtung der ersten Richtung entgegengesetzt ist.

3. FMCW-Radarortungsvorrichtung nach Anspruch 1, wobei Frequenzsegmente (FS1, FS3, FS4, FS6) geringerer Echowinkelsignalauflösung grösseren Steigungen über die Zeit (t) und zugleich grösseren Winkelbereichen und Frequenzsegmente (FS2, FS5) grösserer Echowinkelsignalauflösung kleineren Steigungen über die Zeit (t) und zugleich kleineren Winkelbereichen entsprechen.

4. FMCW-Radarortungsvorrichtung nach Anspruch 1, wobei die ersten Frequenzsegmente (FS1-FS3) und die zweiten Frequenzsegmente (FS4-FS6) durch die Steuereinrichtung (120) fest vorgebbar sind.

5. FMCW-Radarortungsvorrichtung nach Anspruch 1, wobei die ersten Frequenzsegmente (FS1-FS3) und die zweiten Frequenzsegmente (FS4-FS6) durch die Steuereinrichtung (120') flexibel in Abhängigkeit von mindestens einem Fahrparameter gestaltbar sind.

6. FMCW-Radarortungsverfahren mit den Schritten:
Aussenden eines Sendesignals (VO) mit einer steuerbaren Sendesignal-Erzeugungseinrichtung (100) zum Erzeugen des Sendesignals (VO) mit einer Frequenz (f) entsprechend einem eingegebenen Steuersignal (VM), wobei das Steuersignals (VM) derart gestaltet ist, dass das Sendesignal (VO) einen periodischen Verlauf aufweist, Empfangen eines von einem Objekt reflektierten Echosignals (VR) und Durchführen einer darauf basierenden Ortung des Objekts,
**dadurch gekennzeichnet, dass**
eine Periode (t₁, t₇) erste und zweite Frequenzsegmente (FS1-FS3, FS4-FS6) umfasst und die ersten Frequenzsegmente (FS1-FS3) unstetig linear ansteigend über die Zeit und in zweiten Frequenzsegmente (FS4-FS6) unstetig linear abfallend über die Zeit verlaufen; und wobei die jeweiligen ersten und zweiten Frequenzsegmente (FS1-FS3, FS4-FS6) jeweils einen sprungartigen Frequenz Offset (OF) an den Übergangsstellen zwischen jeweils zwei aufeinanderfolgenden ersten Frequenzsegmenten (FS1 - FS3) und zwischen jeweils zwei aufeinanderfolgenden zweiten Frequenzsegmenten (FS4 -FS6) aufweisen und wobei die ersten Frequenzsegmente (FS1-FS3) jeweils untereinander und die zweiten Frequenzsegmente (FS4-FS6) jeweils untereinander unterschiedlichen Winkelbereichen eines Gesamterfassungsbereichs entsprechen und wobei aufeinanderfolgenden erste Frequenzsegmente (FS1-FS3) unterschiedliche Steigungen über der Zeit (t) entsprechend unterschiedlicher Echowinkelsignalauflösung und aufeinanderfolgende zweite Frequenzsegmente (FS4-FS6) unterschiedliche Steigungen über der Zeit (t) entsprechend unterschiedlicher Echowinkelsignalauflösung aufweisen.

7. FMCW- Radarortungsverfahren nach Anspruch 6, wobei die ersten Frequenzsegmente (FS1-FS3) den Gesamterfassungsbereich in einer ersten Richtung durchlaufen und die zweiten Frequenzsegmente (FS4-FS6) den Gesamterfassungsbereich in einer zweiten Richtung durchlaufen, wobei die zweite Richtung der ersten Richtung entgegengesetzt ist.

8. FMCW- Radarortungsverfahren nach Anspruch 6, wobei Frequenzsegmente (FS1, FS3, FS4, FS6) geringerer Echowinkelsignalauflösung größeren Steigungen über die Zeit (t) und zugleich größeren Winkelbereichen und Frequenzsegmente (FS2, FS5) grösserer Echowinkelsignalauflösung kleineren Steigungen über die Zeit (t) und zugleich kleineren Winkelbereichen entsprechen.

9. FMCW- Radarortungsverfahren nach Anspruch 6, wobei die ersten Frequenzsegmente (FS1-FS3) und die zweiten Frequenzsegmente (FS4-FS6) durch die Steuereinrichtung (120) fest vorgegeben werden.

10. FMCW- Radarortungsverfahren nach Anspruch 6, wobei die ersten Frequenzsegmente (FS1-FS3) und die zweiten Frequenzsegmente (FS4-FS6) durch die Steuereinrichtung (120') flexibel in Abhängigkeit von mindestens einem Fahrparameter gestaltet werden.

## Claims

1. FMCW radar locating apparatus having:
a transmission device (100, 14, 160) for emitting a transmission signal (VO) with a controllable transmission signal production device (100) for producing the transmission signal (VO) at a frequency (f) corresponding to an input control signal (VM);
a control device (120; 120'), which is connected to the transmission signal production device (100), for producing the control signal (VM);
a reception device (160, 14, 180, 222, 240) for receiving an echo signal (VR) reflected by an object and for performing locating for the object on the basis thereof,
wherein the control device (120) is designed such that it produces a control signal (VM) that is such that the transmission signal (VO) has a periodic profile, **characterized in that** a period (t₁, t₇) comprises first and second frequency segments (FS1-FS3, FS4-FS6) and the first frequency segments (FS1-FS3) have an unsteady linear profile, in each case rising over time, and the second frequency signals (FS4-FS6) have an unsteady linear profile, in each case falling over time; and wherein the respective first and second frequency segments (FS1-FS3, FS4-FS6) each have an abrupt frequency offset (OF) at the transition points between two respective successive first frequency segments (FS1-FS3) and between two respective successive second frequency segments (FS4-FS6) and wherein the first frequency segments (FS1-FS3) each correspond, among one another, to different angle ranges from a total capture range and the second frequency segments (FS4-FS6) each correspond, among one another, to different angle ranges from a total capture range and wherein successive first frequency segments (FS1-FS3) have different slopes over time (t) in accordance with different echo angle signal resolution and successive second frequency segments (FS4-FS6) have different slopes over time (t) in accordance with different echo angle signal resolution.

2. FMCW radar locating apparatus according to Claim 1, wherein the first frequency segments (FS1-FS3) pass through the total capture range in a first direction and the second frequency segments (FS4-FS6) pass through the total capture range in a second direction, the second direction being opposite to the first direction.

3. FMCW radar locating apparatus according to Claim 1, wherein frequency segments (FS1, FS3, FS4, FS6) of lower echo angle signal resolution correspond to larger slopes over time (t) and at the same time to larger angle ranges, and frequency segments (FS2, FS5) of higher echo angle signal resolution correspond to smaller slopes over time (t) and at the same time to smaller angle ranges.

4. FMCW radar locating apparatus according to Claim 1, wherein the first frequency segments (FS1-FS3) and the second frequency segments (FS4-FS6) can be firmly prescribed by the control unit (120).

5. FMCW radar locating apparatus according to Claim 1, wherein the first frequency segments (FS1-FS3) and the second frequency segments (FS4-FS6) can be configured flexibly on the basis of at least one driving parameter by the control device (120').

6. FMCW radar locating apparatus having the steps of:
emission of a transmission signal (VO) with a controllable transmission signal production device (100) for producing the transmission signal (VO) at a frequency (f) corresponding to an input control signal (VM), wherein the control signal (VM) is designed such that the transmission signal (VO) has a periodic profile, reception of an echo signal (VR) reflected by an object and performance of locating for the object on the basis thereof,
**characterized in that**
a period (t₁, t₇) comprises first and second frequency segments (FS1-FS3, FS4-FS6) and the first frequency segments (FS1-FS3) have an unsteady linear profile rising over time and the second frequency segments (FS4-FS6) have an unsteady linear profile falling over time; and
wherein the respective first and second frequency segments (FS1-FS3, FS4-FS6) each have an abrupt frequency offset (OF) at the transition points between two respective successive first frequency segments (FS1-FS3) and between two respective successive second frequency segments (FS4-FS6) and wherein the first frequency segments (FS1-FS3) each correspond, among one another, to different angle ranges from a total capture range and the second frequency segments (FS4-FS6) each correspond, among one another, to different angle ranges from a total capture range and wherein successive first frequency segments (FS1-FS3) have different slopes over time (t) in accordance with different echo angle signal resolution and successive second frequency segments (FS4-FS6) have different slopes over time (t) in accordance with different echo angle signal resolution.

7. FMCW radar locating method according to Claim 6, wherein the first frequency segments (FS1-FS3) pass through the total capture range in a first direction and the second frequency segments (FS4-FS6) pass through the total capture range in a second direction, the second direction being opposite to the first direction.

8. FMCW radar locating method according to Claim 6, wherein frequency segments (FS1, FS3, FS4, FS6) of lower echo angle signal resolution correspond to larger slopes over time (t) and at the same time to larger angle ranges, and frequency segments (FS2, FS5) of higher echo angle signal resolution correspond to smaller slopes over time (t) and at the same time to smaller angle ranges.

9. FMCW radar locating method according to Claim 6, wherein the first frequency segments (FS1-FS3) and the second frequency segments (FS4-FS6) are firmly prescribed by the control unit (120).

10. FMCW radar locating method according to Claim 6, wherein the first frequency segments (FS1-FS3) and the second frequency segments (FS4-FS6) are configured flexibly on the basis of at least one driving parameter by the control device (120').

## Revendications

1. Dispositif de positionnement radar FMCW comportant :
un dispositif d'émission (100, 14, 160) destiné à émettre un signal d'émission (VO) au moyen d'un dispositif générateur de signal d'émission commandable (100) destiné à générer le signal d'émission (VO) avec une fréquence (f) correspondant à un signal de commande fourni en entrée (VM) ;
un dispositif de commande (120 ; 120') qui est relié au dispositif générateur de signal d'émission (100), destiné à générer le signal de commande (VM) ;
un dispositif de réception (160, 14, 180, 222, 240) destiné à recevoir un signal d'écho (VR) réfléchi par un objet et à exécuter un positionnement de l'objet sur la base de celui-ci,
dans lequel le dispositif de commande (120) est conçu pour générer un signal de commande (VM) de telle manière que le signal d'émission (VO) présente une variation périodique, **caractérisé en ce qu'**une période (t₁, t₇) comprend des premier et second segments de fréquence (FS1-FS3, FS4-FS6) et **en ce que** les premiers segments de fréquence (FS1-FS3) croissent respectivement linéairement de manière discontinue au cours du temps et **en ce que** les seconds segments de fréquence (FS4-FS6) décroissent respectivement linéairement de manière discontinue dans le temps ; et
dans lequel les premiers et seconds segments de fréquence respectifs (FS1-FS3, FS4-FS6) présentent respectivement un décalage de fréquence (OF) pas-à-pas aux positions de transition entre deux premiers segments de fréquence consécutifs respectifs (FS1-FS3) et entre deux segments de fréquence consécutifs respectifs (FS4-FS6) et dans lequel les premiers segments de fréquence (FS1-FS3) et les seconds segments de fréquence (FS4-FS6) correspondent respectivement à des régions angulaires différentes les unes des autres d'une région de détection commune et dans lequel des premiers segments de fréquence consécutifs (FS1-FS3) présentent des croissances différentes les unes des autres au cours du temps (t) ayant une résolution de signal angulaire d'écho différente correspondante et dans lequel des seconds segments de fréquence consécutifs (FS4-FS6) présentent des croissances différentes les unes des autres au cours du temps (t) ayant une résolution de signal angulaire d'écho différente correspondante.

2. Dispositif de positionnement radar FMCW selon la revendication 1, dans lequel les premiers segments de fréquence (FS1-FS3) couvrent la région de détection commune dans une première direction et dans lequel les seconds segments de fréquence (FS4-FS6) couvrent la région de détection commune dans une seconde direction, la seconde direction étant opposée à la première direction.

3. Dispositif de positionnement radar FMCW selon la revendication 1, dans lequel des segments de fréquence (FS1, FS3, FS4, FS6) ayant une résolution de signal angulaire d'écho inférieure correspondent à des croissances supérieures au cours du temps (t) et par conséquent, à des régions angulaires supérieures et dans lequel des segments de fréquence (FS2, FS5) ayant une résolution de signal angulaire d'écho supérieure correspondent à des croissances inférieures au cours du temps (t) et par conséquent, à des régions angulaires inférieures.

4. Dispositif de positionnement radar FMCW selon la revendication 1, dans lequel les premiers segments de fréquence (FS1-FS3) et les seconds segments de fréquence (FS4-FS6) peuvent être prédéterminés de manière fixe au moyen du dispositif de commande (120).

5. Dispositif de positionnement radar FMCW selon la revendication 1, dans lequel les premiers segments de fréquence (FS1-FS3) et les seconds segments de fréquence (FS4-FS6) peuvent être configurés de manière flexible par le dispositif de commande (120') en fonction d'au moins un paramètre de déplacement.

6. Procédé de positionnement par radar FMCW comprenant les étapes suivantes :
émettre un signal d'émission (VO) au moyen d'un dispositif générateur de signal d'émission (100) destiné à générer le signal d'émission (VO) avec une fréquence (f) correspondant à un signal de commande fourni en entrée (VM), dans lequel les signal de commande (VM) est conçu de manière à ce que le signal d'émission (VO) présente une variation périodique, recevoir un signal d'écho (VR) réfléchi par un objet et exécuter un positionnement de l'objet sur la base de celui-ci, **caractérisé en ce que** :
une période (t₁, t₇) comprend des premier et second segments de fréquence (FS1-FS3, FS4-FS6) et **en ce que** les premiers segments de fréquence (FS1-FS3) croissent respectivement linéairement de manière discontinue au cours du temps et **en ce que** les seconds segments de fréquence (FS4-FS6) décroissent respectivement linéairement de manière discontinue dans le temps ; et
dans lequel les premiers et seconds segments de fréquence respectifs (FS1-FS3, FS4-FS6) présentent respectivement un décalage de fréquence (OF) pas-à-pas aux points de transition entre deux premiers segments de fréquence consécutifs respectifs (FS1-FS3) et entre deux segments de fréquence consécutifs respectifs (FS4-FS6) et dans lequel les premiers segments de fréquence (FS1-FS3) et les seconds segments de fréquence (FS4-FS6) correspondent respectivement à des régions angulaires différentes les unes des autres d'une région de détection commune et dans lequel des premiers segments de fréquence consécutifs (FS1-FS3) présentent des croissances différentes les unes des autres au cours du temps (t) correspondant à une résolution de signal angulaire d'écho différente et dans lequel des seconds segments de fréquence consécutifs (FS4-FS6) présentent des croissances différentes les unes des autres au cours du temps (t) correspondant à une résolution de signal angulaire d'écho différente.

7. Procédé de positionnement par radar FMCW selon la revendication 6, dans lequel les premiers segments de fréquence (FS1-FS3) couvrent la région de détection commune dans une première direction et dans lequel les seconds segments de fréquence (FS4-FS6) couvrent la région de détection commune dans une seconde direction, la seconde direction étant opposée à la première direction.

8. Procédé de positionnement par radar FMCW selon la revendication 6, dans lequel des segments de fréquence (FS1, FS3, FS4, FS6) ayant une résolution de signal angulaire d'écho inférieure correspondent à des croissances supérieures au cours du temps (t) et par conséquent, à des régions angulaires supérieures et dans lequel des segments de fréquence (FS2, FS5) ayant une résolution de signal angulaire d'écho supérieure correspondent à des croissances inférieures au cours du temps (t) et par conséquent, à des régions angulaires inférieures.

9. Procédé de positionnement par radar FMCW selon la revendication 6, dans lequel les premiers segments de fréquence (FS1-FS3) et les seconds segments de fréquence (FS4-FS6) peuvent être prédéterminés de manière fixe au moyen du dispositif de commande (120).

10. Procédé de positionnement par radar FMCW selon la revendication 6, dans lequel les premiers segments de fréquence (FS1-FS3) et les seconds segments de fréquence (FS4-FS6) peuvent être configurés de manière flexible par le dispositif de commande (120') en fonction d'au moins un paramètre de déplacement.
